# EUROPÄISCHE PATENTANMELDUNG

(11) **EP 2 154 653 A1**
(43) Veröffentlichungstag der Anmeldung: **17.02.2010**
(21) Anmeldenummer: 08013110.5
(22) Anmeldetag: 21.07.2008
(51) Int. Cl.: G07C 9/00

(54) **Zugangskontrollsystem**

(71) Anmelder: SkiData AG, 5083 Grödig/Salzburg (AT)
(72) Erfinder: Lang, Christian, A-5120 Haigermoos (AT); Ponert, Gregor, A-5020 Salzburg (AT); Harucksteiner, Guido, A-5301 Eugendorf (AT)
(74) Vertreter: Haft, von Puttkamer, Berngruber, Karakatsanis

(57) **Zusammenfassung**

An einem Zugang (6) ist eine Personenvereinzelungseinrichtung (1) mit einer Zugangsberechtigungsleseeinrichtung (4) für Datenträger (8) mit einer Zugangsberechtigung und Identifikationsdaten ("125") vorgesehen, ferner eine Datenverarbeitungsanlage (9), in der ein digitalisiertes Referenzbild des berechtigten Benutzers zusammen mit den Identifikationsdaten ("125") des Datenträgers (8) mit der Zugangsberechtigung abgespeichert ist. Mit einer Kamera (7) wird ein digitalisiertes Bild des Benutzers der Personenvereinzelungseinrichtung (1) aufgenommen, das zusammen mit den von der Zugangsberechtigungsleseeinrichtung (4) gelesenen Identifikationsdaten ("125") an die Datenverarbeitungsanlage (9) übertragen und von der Datenverarbeitungsanlage (9) mit dem unter diesen Identifikationsdaten ("125") zuvor abgespeicherten Referenzbild verglichen wird, wobei der Zugang bei fehlender Übereinstimmung der Bilder verweigert wird.Der Vergleich wird anhand der Gesichtsmerkmale und wenigstens eines weiteren Merkmals des abgespeicherten Referenzbildes mit dem mit der Kamera (7) aufgenommenen Bild des Benutzers der Personenvereinzelungseinrichtung (1) durchgeführt.

## Beschreibung

Die Erfindung bezieht sich auf ein Zugangskontrollsystem nach dem Oberbegriff des Anspruchs 1.

Ein derartiges Zugangskontrollsystem ist aus EP 1647918 A1 bekannt. Dabei sind an die Datenverarbeitungsanlage, in der die Referenzbilder der berechtigten Benutzer mit den ihn zugeordneten Identifikationsdaten abgespeichert sind und an die das mit der Kamera aufgenommene Bild des Benutzers der Personenvereinzelungseinrichtung zusammen mit den von der Zugangsberechtigungsleseeinrichtung gelesenen Identifikationsdaten des Datenträgers übertragen wird, mehrere Endgeräte angeschlossen, an die die Bilder übertragen werden, um einen Sichtvergleich der Bilder durchzuführen. Das bekannte Zugangskontrollsystem erfordert damit einen erheblichen personellen Aufwand.

Aufgabe der Erfindung ist es daher, den Vergleich des Referenzbildes mit dem beim Zugang aufgenommenen Bild des Benutzers der Personenvereinzelungseinrichtung mit hoher Genauigkeit zu automatisieren.

Dies wird erfindungsgemäß mit dem im Anspruch 1 gekennzeichneten Zugangskontrollsystem erreicht. In den Unteransprüchen sind vorteilhafte Ausgestaltungen der Erfindung wiedergegeben.

Erfindungsgemäß wird der Vergleich des abgespeicherten Referenzbildes des berechtigten Benutzers mit dem mit der Kamera aufgenommenen Bild des Benutzers der Personenvereinzelungseinrichtung anhand der Gesichtsmerkmale durch Bildverarbeitung mit der Datenverarbeitungsanlage durchgeführt.

Als Gesichtsmerkmale werden insbesondere Augen, Nase und Mund vermessen, wobei deren Position, Abstand und Lage zueinander bestimmt wird. Dabei können die Wavelet-Analyse, die Hauptkomponenten-Analyse oder dergleichen komplexe Berechnungen mit der Datenverarbeitungsanlage durchgeführt werden.

Der Vergleich der Gesichtsmerkmale ist jedoch mit einer nicht unbeträchtlichen Fehlerrate verbunden. Dies gilt insbesondere, wenn der Benutzer eine das Gesicht teilweise bedeckende Bekleidung, einschließlich Kopfbedeckung, trägt. So wird beispielsweise durch eine Mütze, einen Schutzhelm oder dergleichen, die der Benutzer trägt, die Fehlerrate der Gesichtserkennung deutlich erhöht.

Um die Fehlerrate beim Vergleich der Bilder zu reduzieren, werden daher erfindungsgemäß weitere Merkmale des in der Datenverarbeitungsanlage abgespeicherten Referenzbildes des berechtigten Benutzers und des mit der Kamera aufgenommenen Bildes des Benutzers der Personenvereinzelungseinrichtung miteinander verglichen.

Diese Merkmale können insbesondere Merkmale der Bekleidung, einschließlich einer etwaigen Kopfbedeckung sein. Aus diesem Grunde stellt sowohl das Referenzbild wie das mit der Kamera von dem Benutzer der Personenvereinzelungseinrichtung aufgenommene Bild vorzugsweise ein Brustbild dar, also ein Bild mit dem Kopf und zumindest eines Teils des Körpers des Benutzers.

So kann beispielsweise die Farbe der Bekleidung, einschließlich der Kopfbedeckung ein solches Merkmal bilden, ferner Bereiche unterschiedlicher Farbe und Helligkeit der Bekleidung bzw. der Kopfbedeckung. Beispielsweise kann die Position und/oder die Größe der Taschen des Bekleidungsstücks und/oder eines oder mehrerer Markenlabel zusätzlich zur Gesichtserkennung zum Bildvergleich herangezogen werden, auch z. B. die alphanumerischen Daten und/oder das Bild der einzelnen Label.

Die Kombination aller Vergleiche ergibt dann das Valididierungsergebnis, aus dem die Freigabe oder Verweigerung des Zugangs resultiert.

Vorzugsweise ist eine Beleuchtungseinrichtung zur Beleuchtung des von der Kamera aufgenommenen Benutzers der Personenvereinzelungseinrichtung vorgesehen. Die Beleuchtungseinrichtung kann dabei so ausgebildet sein, dass sie Licht unterschiedlicher Wellenlänge emittiert. Dadurch kann der Tatsache Rechnung getragen werden, dass ein Bekleidungsstück, welches aus unterschiedlichen Materialien, Farbtönen oder dergleichen besteht, Licht unterschiedlicher Wellenlänge unterschiedlich absorbiert. Das heißt, es werden Bilder zum Bildvergleich verwendet, die bei einer bestimmten oder mehreren unterschiedlichen Wellenlängen mit der Kamera aufgenommen worden sind. Mit der Datenverarbeitungsanlage wird vorzugsweise zunächst ein "Head-Tracking" des oder der mit der Kamera aufgenommenen Bildes durchgeführt, also eine Lokalisation des Gesichts des Benutzers der Personenvereinzelungseinrichtung.

Dabei kann mit der Kamera eine Serie von Bildern aufgenommen und dann mit der Datenverarbeitungsanlage das für den Vergleich der Gesichtsmerkmale und des wenigstens eines anderen Merkmals optimale Bild ermittelt werden. Das heißt, es kann eine Serie von z. B. 50 Bildern pro Sekunde aufgenommen werden, um dann das Bild mit der für die Vermessung idealen Blickrichtung des Benutzers für den Vergleich zu ermitteln.

Dabei kann statt einer Digitalkamera auch eine Videokamera verwendet werden, um das optimale Bild für den Bildvergleich aus dem "Video Stream" zu ermitteln.

Als Kamera können eine 2D-, 3D- oder IR- Kamera oder eine Kombination davon verwendet werden.

So hat eine 2D-Kamera beispielsweise im allgemeinen eine sehr hohe Auflösung und ist daher zur Aufnahme des Gesichts des Benutzers besonders geeignet. Ebenso sind Farben mit einer 2D-Kamera im allgemeinen am besten erfassbar.

Ferner kann z. B. zusätzlich eine IR- oder Wärmebildkamera zur Aufnahme des Benutzers der Personenvereinzelungseinrichtung vorgesehen sein. Damit kann die Temperaturverteilung des Benutzers durch Helligkeitsunterschiede dargestellt werden. So ist z. B. das Gesicht nahe der Körpertemperatur wärmer und damit heller als die Oberfläche des Körpers, der von der Bekleidung bedeckt ist. Gleiches gilt, wenn der Benutzer eine der Kopfbedeckung trägt.

Das heißt, wenn in der Datenverarbeitungsanlage zusätzlich ein mit einer Wärmebildkamera aufgenommenes Referenzbild des Benutzers mit einem Bekleidungsstück, das den Oberkörper bedeckt, abgespeichert ist, kann erkannt werden, ob der Benutzer ein den Oberkörper bedeckendes Bekleidungsstück ausgezogen hat. Gleiches gilt für einen Schutz -, also beispielsweise Skihelm. Wenn also ein Merkmal der Bekleidung ein weiteres Merkmal des Referenzbildes zum Bildvergleich bildet, das bei ausgezogenem Bekleidungsstück fehlt, kann damit bei Verwendung einer IR-Kamera das Valididierungsergebnis auf den Gesichtsvergleich reduziert werden.

Bei Verwendung einer 3D-Kamera wird durch die dreidimensionale Erfassung des Gesichts eine höhere Erkennungsgenauigkeit erzielt. Als 3D-Kamera kann eine Kamera mit einem Fotomischdetektor (Photonic Mixer Device oder PMD) verwendet werden, der auf dem Prinzip der Lichtlaufzeitmessung ("Time of Flight") beruht.

Der besondere Vorteil des PMD-Systems liegt darin nicht nur ein 2D Grauwertbild einer Szenerie aufzunehmen, sondern auch das korrespondierende 3D Bild.

Zudem können Hochkontrastbilder (High Dynamic Range Image oder HDRI-Bilder) zum Bildvergleich verwendet werden, die aufgrund ihrer hohen Informationsdichte ebenfalls unter ungünstigen Lichtverhältnissen, beispielsweise bei starkem Gegenlicht eine Gesichtserkennung und Erkennung weiterer Merkmale des Benutzers der Personenvereinzelungseinrichtung ermöglichen.

Das in der Datenverarbeitungsanlage abgespeicherte Referenzbild kann auf unterschiedliche Art und Weise erzeugt werden. So kann beispielsweise ein Ticket oder dergleichen Datenträger online erworben werden, wobei das Referenzbild beim erstmaligen Zutritt der Personenvereinzelungseinrichtung mit der Kamera aufgenommen wird.

Es ist jedoch auch möglich, dass beispielsweise bei einem Skifahrer das Referenzbild das jeweils zuletzt mit der Kamera aufgenommene Bild des Benutzers der Personenvereinzelungseinrichtung darstellt, das dann mit einem Bild verglichen wird, das mit der Kamera beim anschließenden Zugang aufgenommen worden ist.

Das Referenzbild kann jedoch beispielsweise auch von einem anderen Datenträger, beispielsweise einem Ausweis, in dem das Bild des Benutzers digital abgespeichert ist, z. B. mit der Zugangsberechtigungsleseeinrichtung oder einer anderen Leseeinrichtung ausgelesen und dann in der Datenverarbeitungsanlage abgespeichert werden.

Mit dem erfindungsgemäßen System kann der Zugang zu beliebigen Einrichtungen kontrolliert werden, beispielsweise zu Veranstaltungen, Stadien oder dergleichen. Zudem ist es insbesondere für Personenbeförderungsanlagen geeignet, vor allem für Lifte, Seilbahnen und dergleichen in einem Wintersportgebiet. Dabei sind meistens in einer Wintersportregion eine Vielzahl von derartigen Personenbeförderungseinrichtungen mit einem Datenträger mit einer Zugangsberechtigung benutzbar. Die Zugangsberechtigungsleseeinrichtungen an den Personenvereinzelungseinrichtungen der einzelnen Lifte, Bergbahnen und dergleichen Personenbeförderungseinrichtungen sind dabei im Allgemeinen mit einer zentralen Datenverarbeitungsanlage vernetzt, in der bei jedem Zugang die Identifikationsdaten des jeweiligen Datenträgers ausgelesen werden.

Es ist jedoch auch möglich, dass die Zugangsberechtigungsleseeinrichtung zugleich die Datenverarbeitungsanlage für den Bildvergleich bildet. Damit kann z. B. bei Stadien oder Sicherheitsbereichen auch bei Netzwerkausfall ein gesicherter Zutritt durchgeführt werden.

Die Personenvereinzelungseinrichtung kann beispielsweise durch eine Drehsperre gebildet werden. Der Datenträger kann ein berührungsloser oder kontaktbehafteter Datenträger sein. Die Kamera, die das Bild des Benutzers der Personenvereinzelungseinrichtung aufnimmt, kann beispielsweise durch das Lesen des Datenträgers mit der Zugangsberechtigungsleseeinrichtung ausgelöst werden oder durch einen Sensor, der das Vorrücken des Benutzers an oder nach der Personenvereinzelungseinrichtung erfasst.

Die Verweigerung des Zugangs kann beispielsweise durch Blockieren der Drehsperre erfolgen. Es kann jedoch z. B. auch ein optisches und/oder akustisches Signal ausgelöst werden, sodass das Kontrollpersonal den Zugang verweigert.

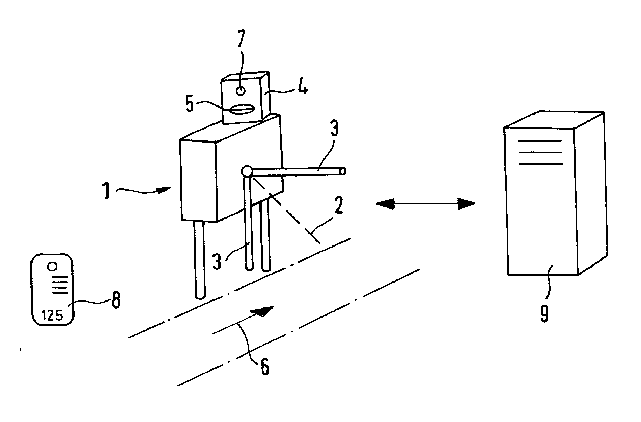

Nachstehend ist die Erfindung anhand der beigefügten Zeichnung beispielhaft näher erläutert, deren einzige Figur schematisch eine Ausführungsform des erfindungsgemäßen Systems zeigt.

Danach ist am Zugang 6 beispielsweise eines Skilifts eine Personenvereinzelungseinrichtung 1 vorgesehen. Die Personenvereinzelungseinrichtung 1 ist als Drehsperre ausgebildet, die zwei um eine Achse 2 drehbare Sperrarme 3 aufweist. Die Personenvereinzelungseinrichtung 1 ist mit einem Gehäuse 4 versehen, in dem eine Zugangsberechtigungsleseeinrichtung vorgesehen ist. In das Kartenmaul 5 der Zugangsberechtigungsleseeinrichtung wird ein als Karte ausgebildeter Datenträger 8 mit einer nicht übertragbaren Zugangsberechtigung gesteckt, beispielsweise mit einem Barcode.

In einer Datenverarbeitungsanlage 9 ist ein Referenzbild des berechtigten Benutzers zusammen mit den Identifikationsdaten des Datenträgers 8, also z. B. "125" abgespeichert.

Wenn der Datenträger 8 in das Kartenmaul 5 gesteckt wird, wird mit einer Kamera in dem Gehäuse 4, von der nur das Objektiv 4 zu sehen ist, ein Bild von dem (nicht dargestellten) Benutzer der Personenvereinzelungseinrichtung 1 aufgenommen. Zugleich werden mit der Zugangsberechtigungsleseeinrichtung 4 von dem Datenträger 8 die Identifikationsdaten "125" des Datenträgers 8 gelesen, die zusammen mit dem digitalisierten Bild, das von der Kamera 7 von dem Benutzer der Personenvereinzelungseinrichtung aufgenommen worden ist, an die Datenverarbeitungsanlage 9 übertragen werden.

Das von der Kamera 7 aufgenommene Bild mit der Identifikationsnummer "125" wird sodann mit dem abgespeicherten Referenzbild mit der gleichen Identifikationsnummer "125" in der Datenverarbeitungsanlage 9 verglichen. Der Vergleich wird dabei anhand der Gesichtsmerkmale und wenigstens eines weiteren Merkmals, beispielsweise der Bekleidung, des abgespeicherten Referenzbildes mit dem mit der Kamera 7 aufgenommenen Bild des Benutzers der Personenvereinzelungseinrichtung durchgeführt. Bei Übereinstimmung der Gesichtsmerkmale und des wenigstens einen weiteren Merkmals des abgespeicherten Referenzbildes und des mit der Kamera aufgenommenen Bildes wird der Zugang 6 freigegeben, also die Drehsperre freigeschaltet, bei fehlender Übereinstimmung hingegen blockiert.

## Patentansprüche

1. System mit wenigstens einer Personenvereinzelungseinrichtung (1) mit einer Zugangsberechtigungsleseeinrichtung (4) für Datenträger (8) mit einer Zugangsberechtigung und Identifikationsdaten ("125"), einer Datenverarbeitungsanlage (9), in der ein digitalisiertes Referenzbild des berechtigten Benutzers zusammen mit den Identifikationsdaten ("125") des Datenträgers (8) mit der Zugangsberechtigung abgespeichert ist, und wenigstens einer Kamera (7), die wenigstens ein digitalisiertes Bild des Benutzers der Personenvereinzelungseinrichtung (1) aufnimmt, das zusammen mit den von der Zugangsberechtigungsleseeinrichtung (4) gelesenen Identifikationsdaten ("125") an die Datenverarbeitungsanlage (9) übertragen und von der Datenverarbeitungsanlage (9) mit dem unter diesen Identifikationsdaten ("125") zuvor abgespeicherten Referenzbild verglichen wird, wobei der Zugang bei fehlender Übereinstimmung der Bilder verweigert wird, **dadurch gekennzeichnet, dass** der Vergleich anhand der Gesichtsmerkmale und wenigstens eines weiteren Merkmals des abgespeicherten Referenzbildes mit dem mit der Kamera (7) aufgenommenen Bild des Benutzers der Personenvereinzelungseinrichtung (1) durchgeführt wird.

2. System nach Anspruch 1, **dadurch gekennzeichnet, dass** das wenigstens eine weitere Merkmal ein Bekleidungsmerkmal ist.

3. System nach Anspruch 1 oder 2, **dadurch gekennzeichnet, dass** eine Beleuchtungseinrichtung zur Beleuchtung des Benutzers der Personenvereinzelungseinrichtung (1) vorgesehen ist, von dem die Kamera (7) ein Bild aufnimmt.

4. System nach Anspruch 1 oder 2, **dadurch gekennzeichnet, dass** eine Beleuchtungseinrichtung zur Beleuchtung des Benutzers der Personenvereinzelungseinrichtung (1) vorgesehen ist und die Szenerie mit unterschiedlichen Wellenlängen ausleuchtet, von dem die Kamera (7) ein Bild aufnimmt.

5. System nach Anspruch 1, **dadurch gekennzeichnet, dass** mit der Kamera (7) eine Serie von Bildern aufgenommen und daraus von der Datenverarbeitungsanlage (9) das für den Vergleich der Gesichtsmerkmale optimale Bild ermittelt wird.

6. System nach Anspruch 4, **dadurch gekennzeichnet, dass** die Kamera (7) durch eine Videokamera gebildet wird.

7. System nach einem der vorstehenden Ansprüche, **dadurch gekennzeichnet, dass** die Validierung anhand eines Video - Streams ermittelt wird

8. System nach einem der vorstehenden Ansprüche, **dadurch gekennzeichnet, dass** zur Validierung zusätzlich die Bildhistorie herangezogen wird.

9. System nach einem der vorstehenden Ansprüche, **dadurch gekennzeichnet, dass** die Validierung nicht auf einer externen Datenverarbeitungsanlage durchgeführt wird, sondern in der Zugangsberechtigungsanlage mit der Personenvereinzelungseinrichtung (1).

10. System nach einem der vorstehenden Ansprüche, **dadurch gekennzeichnet, dass** die Validierung sowohl in der Datenverarbeitungsanlage als auch in der Zugangsberechtigungsanlage mit der Personenvereinzelungseinrichtung (1) durchgeführt wird.

11. System nach einem der vorstehenden Ansprüche, **dadurch gekennzeichnet, dass** die Kamera (7) eine 2D-, 3D-und/oder eine IR-Kamera ist.

12. System nach Anspruch 11, **dadurch gekennzeichnet, dass** die Kamera (7) aus einer Kombination aus einem 2D-Imager und 3D-Imager oder einem 2D-Imager und IR-Imager besteht.

13. System nach Anspruch 1 oder 6, **dadurch gekennzeichnet, dass** zum Bildvergleich mit einem Fotomischdetektor erhaltene Entfernungsbilder verwendet werden.

14. System nach Anspruch 1 oder 6, **dadurch gekennzeichnet, dass** Hochkontrastbilder zum Bildvergleich verwendet werden.

15. System nach Anspruch 1, **dadurch gekennzeichnet, dass** jeder Personenvereinzelungseinrichtung (1) eine Datenverarbeitungsanlage (9) zugeordnet ist oder mehrere Personenvereinzelungseinrichtungen an eine Datenverarbeitungsanlage angeschlossen sind.

16. System nach Anspruch 1, **dadurch gekennzeichnet, dass** das Referenzbild mit der Kamera (7) beim Erstzugang der Personenvereinzelungseinrichtung (1) aufgenommen wird.

## Geänderte Patentansprüche

### Geänderte Patentansprüche gemäss Regel 137(2) EPÜ.

**1.** System mit wenigstens einer Personenvereinzelungseinrichtung (1) mit einer Zugangsberechtigungsleseeinrichtung (4) für Datenträger (8) mit einer Zugangsberechtigung und Identifikationsdaten ("125"), einer Datenverarbeitungsanlage (9), in der ein digitalisiertes Referenzbild des berechtigten Benutzers zusammen mit den Identifikationsdaten ("125") des Datenträgers (8) mit der Zugangsberechtigung abgespeichert ist, und wenigstens einer Kamera (7), die wenigstens ein digitalisiertes Bild des Benutzers der Personenvereinzelungseinrichtung (1) aufnimmt, das zusammen mit den von der Zugangsberechtigungsleseeinrichtung (4) gelesenen Identifikationsdaten ("125") an die Datenverarbeitungsanlage (9) übertragen und von der Datenverarbeitungsanlage (9) mit dem unter diesen Identifikationsdaten ("125") zuvor abgespeicherten Referenzbild anhand der Gesichtsmerkmale und wenigstens eines Bekleidungmerkmals des abgespeicherten Referenzbildes mit dem mit der Kamera (7) aufgenommenen Bild des Benutzers der Personenvereinzelungseinrichtung (1)verglichen wird, wobei der Zugang bei fehlender Übereinstimmung der Bilder verweigert wird, **dadurch gekennzeichnet, dass** wenigstens eine Kamera (7) eine Wärmebildkamera ist, um bei Fehlen des Bekleidungsmerkmals nach Ausziehen des Bekleidungsstücks das Valididierungsergebnis auf den Gesichtsvergleich zu reduzieren.

**2.** System nach Anspruch 1, **dadurch gekennzeichnet, dass** eine Beleuchtungseinrichtung zur Beleuchtung des Benutzers der Personenvereinzelungseinrichtung (1) vorgesehen ist, von dem die Kamera (7) ein Bild aufnimmt.

**3.** System nach Anspruch 1, **dadurch gekennzeichnet, dass** eine Beleuchtungseinrichtung zur Beleuchtung des Benutzers der Personenvereinzelungseinrichtung (1) vorgesehen ist, die die Szenerie mit unterschiedlichen Wellenlängen ausleuchtet, von dem die Kamera (7) ein Bild aufnimmt.

**4.** System nach Anspruch 1, **dadurch gekennzeichnet, dass** mit der Kamera (7) eine Serie von Bildern aufgenommen und daraus von der Datenverarbeitungsanlage (9) das für den Vergleich der Gesichtsmerkmale optimale Bild ermittelt wird.

**5.** System nach Anspruch 3, **dadurch gekennzeichnet, dass** die Kamera (7) durch eine Videokamera gebildet wird.

**6.** System nach einem der vorstehenden Ansprüche, **dadurch gekennzeichnet, dass** die Validierung anhand eines Video - Streams ermittelt wird

**7.** System nach einem der vorstehenden Ansprüche, **dadurch gekennzeichnet, dass** zur Validierung zusätzlich die Bildhistorie herangezogen wird.

**8.** System nach einem der vorstehenden Ansprüche, **dadurch gekennzeichnet, dass** die Validierung nicht auf einer externen Datenverarbeitungsanlage durchgeführt wird, sondern in der Zugangsberechtigungsanlage mit der Personenvereinzelungseinrichtung (1).

**9.** System nach einem der vorstehenden Ansprüche, **dadurch gekennzeichnet, dass** die Validierung sowohl in der Datenverarbeitungsanlage als auch in der Zugangsberechtigungsanlage mit der Personenvereinzelungseinrichtung (1) durchgeführt wird.

**10.** System nach einem der vorstehenden Ansprüche, **dadurch gekennzeichnet, dass** neben der Wärmebildkamera eine Kamera (7) eine 2D- und/oder 3D-Kamera ist.

**11.** System nach Anspruch 10, **dadurch gekennzeichnet, dass** die Kamera (7) aus einer Kombination aus einem 2D-Imager und 3D-Imager oder einem 2D-Imager und IR-Imager besteht.

**12.** System nach Anspruch 1 oder 5, **dadurch gekennzeichnet, dass** zum Bildvergleich mit einem Fotomischdetektor erhaltene Entfernungsbilder verwendet werden.

**13.** System nach Anspruch 1 oder 6, **dadurch gekennzeichnet, dass** Hochkontrastbilder zum Bildvergleich verwendet werden.

**14.** System nach Anspruch 1, **dadurch gekennzeichnet, dass** jeder Personenvereinzelungseinrichtung (1) eine Datenverarbeitungsanlage (9) zugeordnet ist oder mehrere Personenvereinzelungseinrichtungen an eine Datenverarbeitungsanlage angeschlossen sind.

**15.** System nach Anspruch 1, **dadurch gekennzeichnet, dass** das Referenzbild mit der Kamera (7) beim Erstzugang der Personenvereinzelungseinrichtung (1) aufgenommen wird.
